# EUROPÄISCHE PATENTANMELDUNG

(11) **EP 1 279 953 A2**
(43) Veröffentlichungstag der Anmeldung: **29.01.2003**
(21) Anmeldenummer: 02014850.8
(22) Anmeldetag: 03.07.2002
(51) Int. Cl.: G01N 27/447

(54) **Verfahren und Vorrichtung zur Probentrennung**

(30) Priorität: 25.07.2001 DE 10136275
(71) Anmelder: FRAUNHOFER-GESELLSCHAFT ZUR FÖRDERUNG DER ANGEWANDTEN FORSCHUNG E.V., 80636 München (DE)
(72) Erfinder: Hagedorn, Rolf, Dr., 13057 Berlin (DE); Zimmermann, Heiko, Dr., 66386 St. Ingbert (DE)
(74) Vertreter: Hertz, Oliver, Dr.

(57) **Zusammenfassung**

Es werden Verfahren und Vorrichtungen zur Probentrennung beschrieben, bei denen eine Flüssigkeit, die eine Probe mit mindestens einem Typ elektrisch geladener oder magnetischer Partikel enthält, entlang einer Trennstrecke (11) eine Strömung mit einer bestimmten Strömungsrichtung bildet und elektrischen oder magnetischen Feldern ausgesetzt wird, die in mindestens einem Separationsabschnitt (13, 14) der Trennstrecke Komponenten enthalten, die zur Strömungsrichtung gleichgerichtet sind, und in mindestens einem Anreicherungsabschnitt (15, 16) der Trennstrecke Komponenten enthalten, die zur Strömungsrichtung entgegengerichtet sind, so dass die Partikel entlang der Trennstrecke eine effektive Wanderungsgeschwindigkeit besitzen, die von der Position der Partikel in der Trennstrecke und der jeweiligen Ladung oder Magnetisierung der Partikel abhängt.

## Beschreibung

Die Erfindung betrifft Verfahren zur Probentrennung, insbesondere Trennverfahren zur Trennung von Proben in Abhängigkeit von den elektrischen oder magnetischen Eigenschaften von in den Proben enthaltenen Partikeln, wie z. B. elektrophoretische, elektroosmotische oder magnetische Trennverfahren, und Trennvorrichtungen zur Umsetzung der genannten Verfahren.

Die elektrophoretische Fraktionierung stellt ein allgemein bekanntes und in vielfältiger Ausführung sowohl für präparative als auch für analytische Anwendungen genutztes Trennprinzip dar. Die zu trennenden Proben umfassen gelöste oder suspendierte Partikel synthetischen oder natürlichen Ursprungs (z. B. Moleküle, Molekülverbunde, biologische Zellen, Zellbestandteile, biologische Makromoleküle oder synthetische Teilchen, wie z. B. sog. Beads). Mindestens ein Typ der in der Probe enthaltenen Partikel trägt eine elektrische Ladung. Die elektrophoretische Fraktionierung basiert auf den unterschiedlichen, ladungsabhängigen Wanderungsgeschwindigkeiten der Partikel in einem äußeren elektrischen Feld. Bei makroskopischen Verfahren erfolgt die Probentrennung in einem Trenngel, das zwischen Elektroden zur Ausbildung des Feldes angeordnet ist. Bei Fraktionierungen in mikroskopischen Trennvorrichtungen (z. B. Mikrosysteme, Trennkapillaren, charakteristische Dimensionen im mm- und sub-mm-Bereich) wandern die Partikel in flüssigen Trennmedien. Bei den mikroskopischen Verfahren besitzen insbesondere die Kapillarelektrophorese und chipbasierte Ausführungen eine breitere Anwendung (siehe A. van den Berg et al. in "Micro Total Analysis", Systems 2000, Kluwer Acad. Publishers, Dordrecht/Boston/London).

Bei der magnetischen Trennung erfolgt analog eine Wanderung von Proben mit Partikeln verschiedener magnetischer Eigenschaften durch ein Trennmedium in einem äußeren magnetischen Feld. Die partikelspezifische Wanderungsgeschwindigkeit ist von den jeweiligen magnetischen Eigenschaften der Partikel abhängig.

Ein wesentlicher Nachteil der herkömmlichen Trennverfahren betrifft die Lokalisierung und weitere Prozessierung der aufgetrennten Fraktionen. Bei den makroskopischen Anwendungen bilden die aufgetrennten Partikeltypen zwar definierte Banden im Trenngel. Damit ist an sich eine Lokalisierung der Proben gegeben. Es wird jedoch die weitere Prozessierung erschwert, da bspw. bei einer mehrstufigen Trennung die Bande ausgeschnitten und in ein anderes Trenngel übertragen werden muss oder eine Analyse der Bande im Trenngel ggf. wegen einer zu geringen Substanzmenge beschränkt oder ausgeschlossen ist. Bei den mikroskopischen Anwendungen mit flüssigen Trennmedien müssen die Fraktionen zeitlich aufeinanderfolgend in getrennten Reservoiren aufgefangen werden, um für weitere Trenn- oder Analyseschritte zur Verfügung zu stehen.

Die Aufgabe der Erfindung ist es, verbesserte Trennverfahren bereitzustellen, mit denen die Nachteile der herkömmlichen elektrophoretischen oder magnetischen Trennungen überwunden werden und die insbesondere die Lokalisierung der aufgetrennten Fraktionen und deren weitere Prozessierung erleichtern. Die Aufgabe der Erfindung ist es auch, Trennvorrichtungen zur Umsetzung derartiger Verfahren anzugeben.

Diese Aufgaben werden durch Verfahren zur Probentrennung und Trennvorrichtungen mit den Merkmalen gemäß den Patentansprüchen 1 und 10 gelöst. Vorteilhafte Ausführungsformen und Anwendungen der Erfindung ergeben sich aus den abhängigen Ansprüchen.

Die Grundidee der Erfindung ist es, bei einer Trennung strömender, elektrisch geladener oder magnetischer Partikel die effektive Wanderungsgeschwindigkeit der Partikel zu modulieren, indem die Felder in mindestens einem ersten Abschnitt (Separationsabschnitt) der Trennstrecke Komponenten enthalten, die zur Strömungsrichtung der Partikel gleichgerichtet sind, und in mindestens einem zweiten Abschnitt (Anreicherungsabschnitt) der Trennstrecke Komponenten enthalten, die zur Strömungsrichtung entgegengerichtet sind. Durch die abschnittsweise verschiedene Ausrichtung der äußeren Felder erfolgt in dem mindestens einem Separationsabschnitt eine Addition der elektrisch oder magnetisch induzierten Wanderungsgeschwindigkeit zur strömungsinduzierten Geschwindigkeit der Partikel, während in dem mindestens einen Anreicherungsabschnitt eine Subtraktion der elektrisch oder magnetisch induzierten Wanderungsgeschwindigkeit von der strömungsinduzierten Geschwindigkeit erfolgt. Dieses Prinzip, das im folgenden auch als Differentialprinzip bezeichnet wird, ermöglicht es vorteilhafterweise, durch die Wahl der Verfahrensparameter (insbesondere Strömungsgeschwindigkeit, Feldstärkekomponente in Strömungsrichtung) festzulegen, welche Abschnitte der Trennstrecke durch die zu trennenden Partikel mit welcher Geschwindigkeit durchlaufen werden können. Dies ermöglicht eine gegenüber herkömmlichen Trennverfahren verbesserte Lokalisierung der Partikel entlang der Trennstrecke.

Das Differentialprinzip kann gemäß einer bevorzugten Ausführungsform der Erfindung derart umgesetzt werden, dass die effektive Wanderungsgeschwindigkeit der Partikel von mindestens einem Partikeltyp entsprechend in mindestens einem Anreicherungsabschnitt gleich Null ist. Wenn die elektrisch oder magnetisch induzierte Wanderung entgegengesetzt zur Strömungsrichtung gerade die Strömungsgeschwindigkeit kompensiert, wird die effektive Wanderungsgeschwindigkeit zu Null. Je nach den eingestellten Verfahrensparametern wird in den Anreicherungsabschnitten für bestimmte, zu trennende Partikeltypen eine Barriere gebildet. Damit wird die Lokalisierung der Fraktionen der zu trennenden Partikel noch verbessert. Die Positionen der einzelnen Fraktionen entlang der Trennstrecke sind durch die Verfahrensparameter eindeutig festgelegt.

Gemäß einer weiteren bevorzugten Ausführungsform der Erfindung erfolgt zusätzlich zur abschnittsweisen Variation der Ausrichtung der äußeren Felder auch eine abschnittsweise Variation der Strömungsgeschwindigkeit entlang der Trennstrecke. Hierzu wird beispielsweise eine Trennstrecke mit abschnittsweise größerem oder kleinerem Strömungsquerschnitt verwendet. Vorzugsweise werden die Anreicherungsabschnitte mit einem größeren Strömungsquerschnitt ausgebildet als die Separationsabschnitte, so dass der jeweils abzutrennende Partikeltyp mit größerer Effektivität zurückgehalten wird.

Gemäß einer weiteren vorteilhaften Ausführungsform der Erfindung erfolgt eine abschnittsweise Variation des Betrages der zur Strömungsgeschwindigkeit gleich- oder entgegengerichteten Feldstärkekomponente. Diese Maßnahme ermöglicht eine abschnittsweise Modulierung der Effektivität des Trennverfahrens entlang der Trennstrecke.

Die erfindungsgemäß realisierte zeitweilige oder stationäre Lokalisierung von mindestens einer Partikelfraktion an mindestens einem Anreicherungsabschnitt besitzt den Vorteil, dass vom jeweiligen Anreicherungsabschnitt ausgehend unmittelbar eine weitere Auftrennung der Partikelfraktion in Subfraktionen erfolgen kann. Des weiteren ist am jeweiligen Anreicherungsabschnitt eine Detektion, Analyse und/oder Prozessierung der jeweils vorhandenen oder angesammelten Partikel möglich. Der Einsatzbereich herkömmlicher elektrischer oder magnetischer Trennverfahren wird damit erheblich erweitert. Das Trennergebnis wird mit einer erhöhten Zuverlässigkeit erhalten. Es wird erstmalig die Möglichkeit eines unmittelbar zweidimensionalen Trennverfahrens in Mikrosystemen eröffnet.

Gegenstand der Erfindung sind auch Trennvorrichtungen zur elektrophoretischen, elektroosmotischen oder magnetischen Trennung von Partikeln, die zur Umsetzung des Differentialprinzips eingerichtet sind. Eine erfindungsgemäße Trennvorrichtung umfasst insbesondere mindestens eine Trennstrecke, die einen Strömungskanal für eine Lösung oder Suspension der zu trennenden Partikel bildet, und einen Feldgenerator zur Erzeugung elektrischer oder magnetischer Felder, die entlang mindestens eines Separationsabschnittes und mindestens eines Anreicherungsabschnittes der Trennstrecke Feldstärkekomponenten enthalten, die zur Strömungsrichtung in der Trennstrecke jeweils gleich- oder entgegengerichtet sind. Der Feldgenerator umfasst beispielsweise mindestens zwei Elektroden oder mindestens zwei Induktivitäten zur Erzeugung der elektrischen oder magnetischen Felder.

Gemäß einer bevorzugten Ausführungsform der Erfindung ist die Trennstrecke in einem fluidischen Mikrosystem gebildet. Der Strömungskanal ist in einem Mikrochip geformt und besitzt charakteristische Querschnittsdimensionen im mm- oder Sub-mm-Bereich. Die Umsetzung des Differentialprinzips im fluidischen Mikrosystem besitzt den Vorteil, dass in der Trennstrecke bei typischen Strömungsgeschwindigkeiten, wie sie in der herkömmlichen Mikrosystemtechnik realisiert werden, wirbelfreie Strömungen gebildet werden. Bei ausreichend geringer Strömungsgeschwindigkeit kann die Trennstrecke jedoch auch makroskopisch mit charakteristischen Querschnittsdimensionen im cm-Bereich oder darüber gebildet sein.

Gemäß bevorzugten Ausführungsformen der erfindungsgemäßen Trennvorrichtung ist diese an mindestens einem Anreicherungsabschnitt mit einem Abzweig zu einer weiteren Trennstrecke, einer Detektoreinrichtung und/oder einer Manipulatoreinrichtung zur Analyse oder Prozessierung der im jeweiligen Anreicherungsabschnitt vorhandenen oder angesammelten Partikel ausgestattet.

Weitere Vorteile und Einzelheiten der Erfindung werden im folgenden unter Bezug auf die beigefügten Figuren beschrieben. Es zeigen:
- Fign. 1 bis 3: schematische Draufsichten auf verschiedene Ausführungsformen erfindungsgemäßer Trennvorrichtungen,
- Fig. 4: eine schematische Seitenansicht einer Trennvorrichtung gemäß Fig. 1, und
- Fign. 5 und 6: schematische Draufsichten auf weitere Ausführungsformen erfindungsgemäßer Trennvorrichtungen.

Die Erfindung wird im folgenden unter beispielhaftem Bezug auf die Auftrennung geladener Partikel im elektrischen Feld durch Elektroosmose oder Elektrophorese beschrieben. Erfindungsgemäß kann alternativ oder zusätzlich eine magnetische Auftrennung analog zu den erläuterten Prinzipien durchgeführt werden.

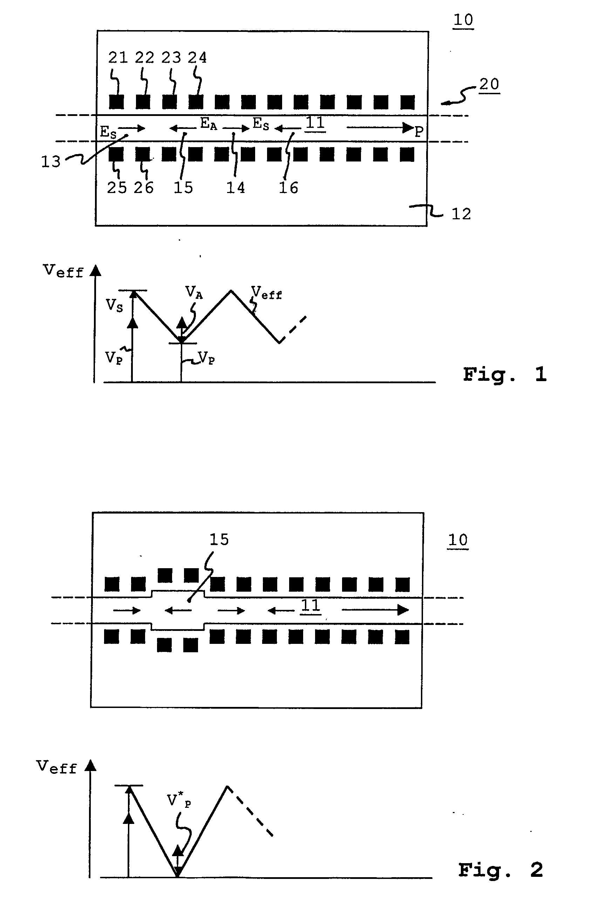

Fig. 1 zeigt in schematischer Draufsicht eine erfindungsgemäße Trennvorrichtung 10 mit einer Trennstrecke 11, die in einem Trägerkörper 12 gebildet ist. Der Trägerkörper 12 ist beispielsweise Teil eines Fluidikchips, wie er an sich aus der fluidischen Mikrosystemtechnik bekannt ist. Er besteht beispielsweise aus einem inertem Kunststoff- oder Halbleitermaterial oder aus Glas. Die Trennstrecke 11 ist geradlinig, stückweise geradlinig oder kurvenförmig in die Oberfläche des Trägerkörpers 12 eingearbeitet. In der Praxis kann der durch die Trennstrecke 11 gebildete Strömungskanal nach oben offen sein oder auch durch eine Abdeckung verschlossen sein. An den Enden der Trennstrecke 11 setzt sich das Fluidiksystem je nach Anwendung mit weiteren Komponenten fort (gestrichelt gezeichnet).

Am Trägerkörper 12 ist auch ein Feldgenerator angebracht, der beim dargestellten Ausführungsbeispiel eine Vielzahl von einzelnen Elektroden 21, 22, 23, 24, 25, 26 ... umfasst. Die Elektroden sind mit an sich bekannten Verfahren an die Trennstrecke angrenzend in den Boden, die Seitenwände und/oder die Abdeckung der Trennstrecke 11 integriert. Jede Elektrode ist über eine elektrische Leitung mit einer Steuereinrichtung (nicht dargestellt) verbunden. Die Elektroden werden beispielsweise durch Elektrodenschichten auf der jeweiligen Wand der Trennstrecke 11 gebildet. Die Elektrodenform ist frei wählbar. Es können beispielsweise runde, eckige oder streifenförmige Elektrodenschichten vorgesehen sein. Die Größe der Elektroden wird je nach der Größer der gewünschten Separations- und Anreicherungsabschnitte gewählt.

Entlang der Trennstrecke 11 sind verschiedene Abschnitte (oder: Teilstrecken, Teilbereiche) gebildet, die sich durch die jeweilige Feldausrichtung relativ zur Strömungsrichtung im Kanal unterscheiden. Es sind erstens mindestens ein Separationsabschnitt 13, 14 und mindestens ein Anreicherungsabschnitt 15, 16 vorgesehen. Die Abschnitte werden jeweils im Bereich einer Elektrodengruppe gebildet, die mindestens zwei Elektroden umfasst, die als Anode und Kathode betrieben werden, so dass das zwischen Anode und Kathode gebildete elektrische Feld mindestens eine zur lokalen Ausrichtung der Trennstrecke parallele, gleichgerichtete oder parallele, entgegengesetzte Feldstärkekomponente enthält. Die Feldstärkekomponenten in den Separations- und Anreicherungsabschnitten 13, 14 und 15, 16 sind jeweils mit Pfeilen E_{S} und E_{A} illustriert.

Welche der Elektroden 21, 22, 25 und 26, die den Separationsabschnitt 13 bilden, als Anode oder Kathode angesteuert werden, wird anwendungsabhängig gewählt. Wenn beispielsweise Elektroden in den Boden- und Abdeckungsebenen übereinander angeordnet sind, so befinden sich die übereinander angeordneten Elektroden vorzugsweise auf dem gleichen Potential, während Potentialdifferenzen zur Erzeugung der Trennfelder zwischen in Strömungsrichtung benachbarten Elektroden gebildet sind. Abweichend von der Illustration in Fig. 1 können die Separations- und Anreicherungsabschnitte auch unmittelbar aneinander grenzend angeordnet sein.

Mit der Trennvorrichtung 10 wird das oben genannte Differentialprinzip realisiert, wie dies im folgenden insbesondere unter Bezug auf den unteren Teil von Fig. 1 erläutert wird. Eine Lösung oder Suspension mit den zu trennenden Partikeln (z. B. Moleküle, Molekülverbunde, biologische Zellen, Zellbestandteile, biologische Makromoleküle oder synthetische Teilchen) bildet in der Trennstrecke 11 eine laminare, wirbelfreie Strömung mit einer Strömungsrichtung entsprechend der Ausrichtung der Trennstrecke 11. Die Strömungsgeschwindigkeit der Lösung oder Suspension (siehe Pfeil P) ist bei der dargestellten Ausführungsform gemäß Fig. 1 entlang der gesamten Trennstrecke 11 konstant. Den Partikeln ist durch die Strömung eine strömungsinduzierte Geschwindigkeit v_{P} relativ zum Trägerkörper 12 aufgeprägt. In den Separations- und Anreicherungsabschnitten 13, 14, 15, 16 sind die Partikel den elektrischen Feldern ausgesetzt, die den Partikeln zusätzlich eine elektrisch induzierte Wanderungsgeschwindigkeit v_{S} oder v_{A} aufprägen, die je nach Ausrichtung der Felder mit der Strömungsgeschwindigkeit gleichgerichtet oder zu dieser entgegengesetzt sind. Es ergibt sich eine effektive Wanderungsgeschwindigkeit v_{eff}, die im unteren Teil von Fig. 1 illustriert ist.

In den Separationsabschnitten addieren sich die strömungsinduzierte und die elektrisch induzierte Geschwindigkeit der Partikel, in den Anreicherungsabschnitten erfolgt eine Subtraktion. Es ergibt sich eine Modulation der effektiven Wanderungsgeschwindigkeit der Partikel entlang der Trennstrecke 11. Die Stärke der Modulation ist von den elektrischen Ladungseigenschaften der Partikel abhängig. Partikel mit einer großen elektrischen Ladung werden im elektrischen Feld stärker beeinflusst als Partikel mit einer geringeren elektrischen Ladung. Die Modulationstiefe der effektiven Wanderungsgeschwindigkeit v_{eff} ist somit für jede Partikelfraktion der zu trennenden Probe verschieden. Es ergibt sich eine Auftrennung der Partikel entlang der Trennstrecke 11. Beim Durchströmen der Trennstrecke 11 halten sich die einzelnen Partikeltypen in den jeweiligen Anreicherungsabschnitten 15 länger auf als in den Separationsabschnitten 13, 14.

Ein besonderer Vorteil der Erfindung besteht darin, dass durch die Verfahrensparameter Strömungsgeschwindigkeit und Feldstärke die Trennfunktion der einzelnen Abschnitte einfach auf die Eigenschaften des zu trennenden Partikelgemisches abgestimmt werden können. Des weiteren können die Verfahrensparameter so eingestellt werden, dass sich typspezifisch die elektrisch induzierte Wanderungsgeschwindigkeit und die strömungsinduzierte Wanderungsgeschwindigkeit in einzelnen Anreicherungsabschnitten gerade kompensieren, so dass die effektive Wanderungsgeschwindigkeit zu Null wird. Dies kann zusätzlich durch eine Variation der Strömungsgeschwindigkeit beeinflusst werden, wie es im folgenden unter Bezug auf Fig. 2 erläutert wird.

Fig. 2 zeigt eine abgewandelte Ausführungsform einer erfindungsgemäßen Trennvorrichtung 10, die sich durch eine veränderte Formgebung der Trennstrecke 11 von der Gestaltung gemäß Fig. 1 unterscheidet. Die Trennstrecke 11 besitzt einen abschnittsweise modulierten Strömungsquerschnitt. Im Bereich des Anreicherungsabschnittes 15 ist der Strömungsquerschnitt der Trennstrecke 11 erweitert. Aus Übersichtlichkeitsgründen ist lediglich ein Anreicherungsbereich 15 mit einer Erweiterung des Strömungsquerschnittes illustriert. Erfindungsgemäß können aber auch mehrere Erweiterungen, gegebenenfalls mit verschieden stark erweiterten Strömungsquerschnitten, vorgesehen sein. Im Anreicherungsabschnitt 15 reduziert sich lokal die Strömungsgeschwindigkeit v_{P} auf einen verringerten Wert v_{P}* (siehe unterer Teil in Fig. 2). Beim dargestellten Beispiel wird die reduzierte Strömungsgeschwindigkeit gerade durch die elektrisch induzierte Wanderungsgeschwindigkeit v_{A}, die der Strömungsgeschwindigkeit entgegengerichtet ist, kompensiert, so dass die vorbestimmten Partikel, die im Anreicherungsabschnitt 15 gerade die ladungsabhängige elektrisch induzierte Wanderungsgeschwindigkeit v_{A} besitzen, im Anreicherungsabschnitt 15 zurückgehalten werden.

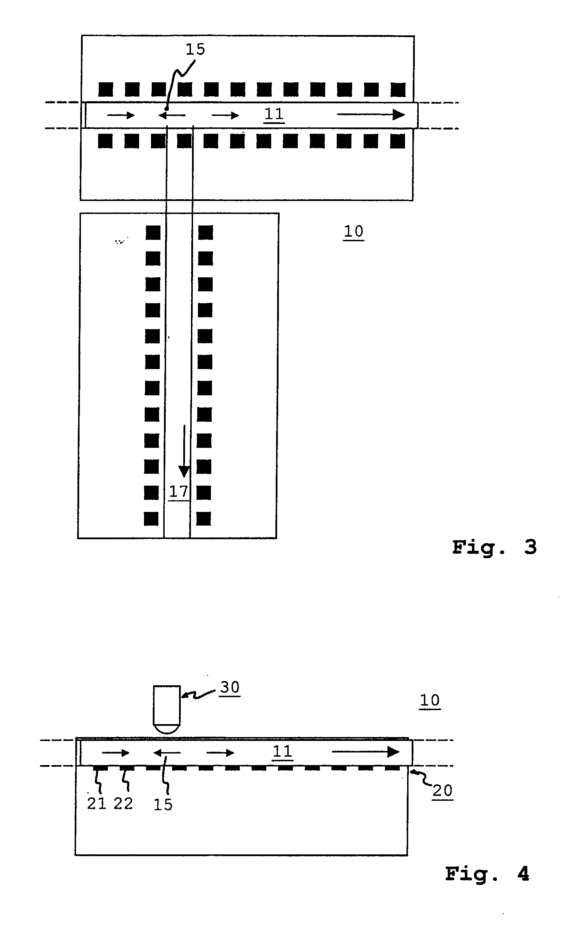

Die Realisierung einer mehrdimensionalen Auftrennung im fluidischen Mikrosystem auf der Grundlage der Differentialtrennung ist in Fig. 3 illustriert. Eine erfindungsgemäße Trennvorrichtung 10 umfasst eine erste Trennstrecke 11, die analog zu den oben erläuterten Prinzipien betrieben wird, und mindestens eine weitere Trennstrecke 17, die an einem Anreicherungsabschnitt 15 von der ersten Trennstrecke 11 abzweigt. Aus Übersichtlichkeitsgründen ist lediglich eine abzweigende Trennstrecke 17 illustriert. Allgemein kann an jedem Anreicherungsabschnitt in beliebiger Richtung eine weitere Trennstrecke abzweigen. Des weiteren können von jeder Trennstrecke wiederum Abzweigungen aus den jeweiligen Anreicherungsabschnitten vorgenommen werden.

Die Trennvorrichtung 10 gemäß Fig. 3 wird derart betrieben, dass in einer ersten Trennphase eine Auftrennung des Probengemisches in Partikelfraktionen entlang der ersten Trennstrecke 11 erfolgt. Die Partikelfraktionen sammeln sich an den Anreicherungsabschnitten 15. In einer zweiten Trennphase werden die Partikelfraktionen jeweils in die angrenzende zweite Trennstrecke 17 geströmt, wo eine weitere Auftrennung in Subfraktionen durchgeführt wird. Zur weiteren Auftrennung werden die Elektroden entlang der abgezweigten Trennstrecke 17 mit entsprechend abgewandelten Feldern beaufschlagt.

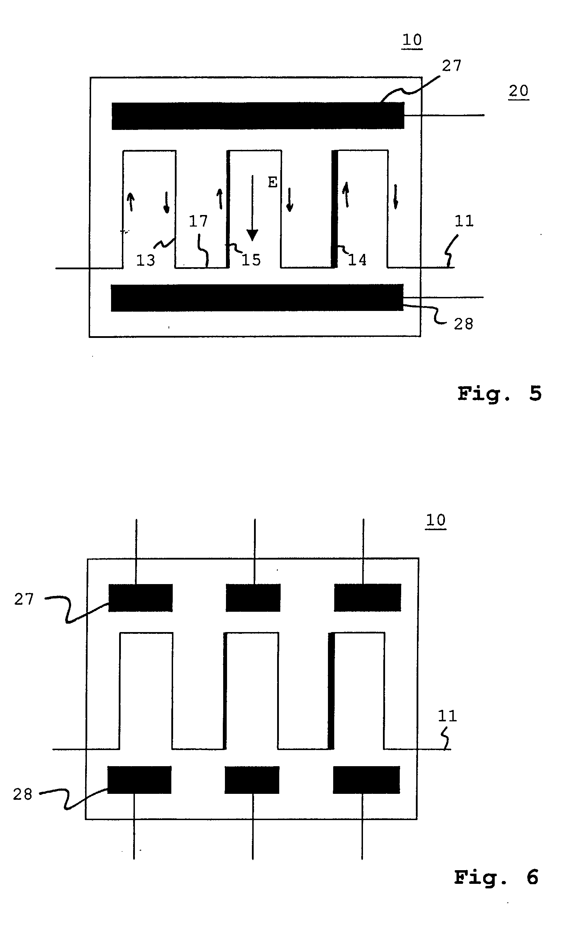

Fig. 4 zeigt eine schematische Seitenansicht einer Trennvorrichtung gemäß Fig. 1, bei der der Feldgenerator 20 lediglich Elektroden 21, 22, ... auf dem Boden der Trennstrecke 11 umfasst. In Fig. 4 ist ferner illustriert, wie die Trennvorrichtung 10 mit einer Detektor- und/oder einer Manipulatoreinrichtung 30 (schematisch ausschnittsweise dargestellt) kombiniert werden kann. Die Detektor- und/oder Manipulatoreinrichtung 30 ist bei mindestens einem Anreicherungsabschnitt 15 positioniert und umfasst beispielsweise ein Mikroskop zur optischen Beobachtung und/oder gezielten Bestrahlung der Partikel im Anreicherungsabschnitt 15. Die Partikel können beispielsweise mit einer optischen Pinzette (Lasertweezer) manipuliert werden. Es können des weiteren Elektroden zur dielektrischen Manipulation der Partikel vorgesehen sein. Die Elektroden können durch die Elektroden des Feldgenerators 20 oder durch zusätzliche Elektroden gebildet werden.

Mit der erfindungsgemäßen Trennvorrichtung 10 werden beispielsweise Proteingemische aufgetrennt, die aus Proteinen mit verschiedenen elektrischen Ladungen bestehen. Das aufzutrennende Proteingemisch durchströmt permanent die Trennstrecke 11. Es erfolgt eine Akkumulation der Proteine je nach ihren Ladungen an verschiedenen Anreicherungsabschnitten. Die Akkumulation wird beispielsweise mit einem Detektor erfasst. Ein besonderer Vorteil der Erfindung besteht darin, dass eine Probe laufend aufgetrennt werden kann, bis genügend Material in einem Anreicherungsabschnitt angesammelt ist, um mit der Detektoreinrichtung erfasst zu werden.

Bei Realisierung der Erfindung in fluidischen Mikrosystemen werden die Elektroden mit Spannungen derart beaufschlagt, dass entlang der Trennstrecke Feldstärken von rund 30 kV/m gebildet werden. Bei makroskopischen Anwendungen werden geringere Feldstärken von rund 3 kV/m gebildet.

Abweichend von den Gestaltungen gemäss den Fign. 1 bis 4 kann die abschnittsweise abwechselnde Ausrichtung der elektrischen Felder mit oder gegen die Strömungsrichtung auch durch eine abschnittsweise Änderung der Strömungsrichtung relativ zu den Elektroden realisiert werden. Gemäß den Fign. 5 und 6 ist in der erfindungsgemäßen Trennvorrichtung 10 mindestens eine meanderförmige Trennstrecke 11 vorgesehen, die von dem aufzutrennenden Partikelgemisch durchströmt wird. Die Trennstrecke 11 wird auf 2 Seiten durch die Elektroden 27, 28 des Feldgenerators 20 begrenzt. Die Elektrode 27 ist beispielsweise eine Anode, während die gegenüberliegende Elektrode 28 eine Kathode bildet. Die Feldrichtung zwischen den Elektroden ist mit dem Pfeil E illustriert.

Durch die Meanderform sind entlang der Trennstrecke 11 wiederum Separationsabschnitte 13, 14 gebildet, in denen die lokale Strömungsgeschwindigkeit und die Feldrichtung E gleichgerichtet sind, und Anreicherungsabschnitte 15 gebildet, in denen die Strömungsgeschwindigkeit und die Feldrichtung entgegengesetzt gerichtet sind. Analog zu den oben erläuterten Prinzipien erfolgt eine Modulierung der effektiven Wanderungsgeschwindigkeit der Partikel. Die Partikel sammeln sich jeweils in den Anreicherungsabschnitten 15 oder den diesen vorgelagerten Abschnitten 16 senkrecht zur Richtung des elektrischen Feldes E. Die Abschnitte 16 wirken ebenfalls wie Anreicherungsabschnitte. Analog zu der Gestaltung gemäß Fig. 2 kann auch bei der meanderförmigen Trennstrecke 11 eine Variation des Strömungsquerschnittes vorgesehen sein, wie dies in den Fign. 5 und 6 schematisch illustriert ist. Die Separationsabschnitte 13, 14 besitzen jeweils einen geringeren Strömungsquerschnitt als die Anreicherungsabschnitte 15, 16.

Durch die Wahl der Strömungsgeschwindigkeit, der Kanalgeometrie und der Feldstärke können die jeweils zurückgehaltenen Partikelfraktionen definiert werden. Die Zahl der bei den Ausführungsformen gemäß den Fign. 5 und 6 vorgesehenen Meanderschleifen ist an die jeweilige Trennaufgabe angepasst. Bei Auftrennung eines Partikelgemisches in vier Fraktionen sind entsprechend vier Meanderschleifen vorgesehen.

Bei der Gestaltung gemäß Fig. 6 sind an jeder Meanderschleife der Trennstrecke 11 jeweils ein Elektrodenpaar 27, 28 vorgesehen. Dies ermöglicht eine zusätzliche Modulation der elektrisch induzierten Wanderungsgeschwindigkeit in den jeweiligen Abschnitten.

Die einzelnen Merkmale der verschiedenen Ausführungsformen der Erfindung können einzeln oder in Kombination für die Umsetzung der Erfindung in ihren verschiedenen Ausgestaltungen von Bedeutung sein.

## Patentansprüche

1. Verfahren zur Probentrennung, bei dem eine Flüssigkeit, die eine Probe mit mindestens einem Typ elektrisch geladener oder magnetischer Partikel enthält, entlang einer Trennstrecke (11) eine Strömung mit einer bestimmten Strömungsrichtung bildet und elektrischen oder magnetischen Feldern ausgesetzt wird, die in mindestens einem Separationsabschnitt (13, 14) der Trennstrecke Komponenten enthalten, die zur Strömungsrichtung gleichgerichtet sind, und in mindestens einem Anreicherungsabschnitt (15, 16) der Trennstrecke Komponenten enthalten, die zur Strömungsrichtung entgegengerichtet sind, so dass die Partikel entlang der Trennstrecke eine effektive Wanderungsgeschwindigkeit besitzen, die von der Position der Partikel in der Trennstrecke und der jeweiligen Ladung oder Magnetisierung der Partikel abhängt.

2. Verfahren gemäß Anspruch 1, bei dem entlang der Trennstrecke verschiedene Strömungsquerschnitte vorgesehen sind und die Strömung entlang der Trennstrecke mit einer jeweils in Abhängigkeit vom Strömungsquerschnitt variierenden Strömungsgeschwindigkeit gebildet ist.

3. Verfahren gemäß Anspruch 2, bei dem die Strömungsgeschwindigkeit in dem mindestens einen Separationsabschnitt (13, 14) der Trennstrecke erhöht und in dem mindestens einen Anreicherungsabschnitt (15, 16) der Trennstrecke verringert wird.

4. Verfahren gemäß Anspruch 3, bei dem die Strömungsgeschwindigkeit und die Stärke der elektrischen oder magnetischen Felder so eingestellt werden, dass die Wanderungsgeschwindigkeit der Partikel in mindestens einem Anreicherungsabschnitt (15) gleich 0 ist.

5. Verfahren gemäß Anspruch 4, bei dem von mindestens einem Anreicherungsabschnitt (15) ausgehend eine weitere Trennung der Partikel jeweils entlang einer weiteren Trennstrecke (17) erfolgt, die vom jeweiligen Anreicherungsabschnitt (15) abzweigt.

6. Verfahren gemäß einem der vorhergehenden Ansprüche, bei dem bei mindestens einem Anreicherungsabschnitt (15) eine Detektion, Analyse und/oder Prozessierung der im Anreicherungsabschnitt (15) vorhandenen oder angesammelten Partikel durchgeführt wird.

7. Verfahren gemäß einem der vorhergehenden Ansprüche, bei dem die Strömung wirbelfrei gebildet ist.

8. Verfahren gemäß einem der vorhergehenden Ansprüche, bei dem die Stärke der elektrischen oder magnetischen Felder entlang der Trennstrecke (11) abschnittsweise variiert wird.

9. Verfahren gemäß einem der vorhergehenden Ansprüche, bei dem die Trennstrecke (11) mit einer charakteristischen Querschnittsdimension im mm- oder sub-mm-Bereich in einem fluidischen Mikrosystem gebildet ist.

10. Trennvorrichtung (10), insbesondere zur elektrophoretischen, elektroosmotischen oder magnetischen Probentrennung, die eine Trennstrecke (11) zur Bildung einer Strömung einer Lösung oder Suspension eines zu trennenden Partikelgemisches mit einer vorbestimmten Strömungsrichtung und einen Feldgenerator (20) umfasst, der zur Erzeugung von elektrischen oder magnetischen Feldern mit abschnittsweise verschiedener Ausrichtung von Feldstärkekomponenten relativ zur Strömungsrichtung entlang der Trennstrecke (11) eingerichtet ist.

11. Trennvorrichtung gemäß Anspruch 10, bei der die Trennstrecke (11) als Strömungskanal in einem Trägerkörper (12) gebildet ist, der Teil eines Fluidikchips ist.

12. Trennvorrichtung gemäß Anspruch 10 oder 11, bei der entlang der Trennstrecke (11) verschiedene Strömungsquerschnitte vorgesehen sind.

13. Trennvorrichtung gemäß einem der Ansprüche 10 bis 12, bei der die Trennstrecke (11) geradlinig geformt ist und der Feldgenerator (20) eine Vielzahl von Elektroden umfasst, die entlang der Trennstrecke (11) angeordnet sind.

14. Trennvorrichtung gemäß einem der Ansprüche 10 bis 12, bei der die Trennstrecke (11) meanderförmig geformt ist und der Feldgenerator (20) mindestens zwei Elektroden (27, 28) umfasst, die auf zwei Seiten der Trennstrecke (11) angeordnet sind.

15. Trennvorrichtung gemäß einem der Ansprüche 10 bis 14, bei der an mindestens einem Anreicherungsabschnitt (15) eine weitere Trennstrecke (17) abzweigt.

16. Trennvorrichtung gemäß einem der Ansprüche 10 bis 15, bei der an mindestens einem Anreicherungsabschnitt (15) eine Detektor- und/oder Manipulatoreinrichtung (30) vorgesehen ist.
